# FASCICULE DE BREVET EUROPEEN

(11) **EP 2 996 991 B1**
(45) Date de publication et mention de la délivrance du brevet: **31.05.2017**
(21) Numéro de dépôt: 14722164.2
(22) Date de dépôt: 30.04.2014
(51) Int. Cl.: C02F 11/12, C01B 25/45, C02F 3/28, C02F 9/00, C02F 11/04

(54) **PROCÉDÉ ET DISPOSITIF DE TRAITEMENT D'UNE BIOMASSE MÉLANGÉE À DE L'EAU POUR PRODUIRE DE L'EAU POTABLE, DU BIOGAZ ET DES MATIÈRES SÈCHES COMBUSTIBLES**
VERFAHREN UND VORRICHTUNG ZUR BEHANDLUNG EINER MIT WASSER VERMISCHTEN BIOMASSE ZUR HERSTELLUNG VON TRINKWASSER, BIOGAS UND BRENNBAREN FESTSTOFFEN
PROCESS AND DEVICE FOR TREATING A BIOMASS MIXED WITH WATER IN ORDER TO PRODUCE DRINKING WATER, BIOGAS AND COMBUSTIBLE SOLIDS

(30) Priorité: 13.05.2013 LU 92192
(43) Date de publication de la demande: 23.03.2016
(73) Titulaire: Nereus SAS, 34230 Le Pouget (FR)
(72) Inventeur: TROUVE, Emmanuel, 34270 Vaquières (FR)
(74) Mandataire: Dennemeyer & Associates S.A.
(86) Numéro de dépôt international: PCT/EP2014/058901
(87) Numéro de publication internationale: WO 2014/184004

(56) Documents cités:
- EP-A1- 2 060 544
- EP-A1- 2 390 235
- US-A- 6 059 971
- US-B1- 6 368 849
- BOUGRIER, C AND ALBASI, CLAIRE AND DELGENÈS, J.- P. AND CARRÈRE, H: "Effect of ultrasonic, thermal and ozone pre-treatments on waste activated sludge solubilisation and anaerobic biodegradability", CHEMICAL ENGINEERING AND PROCESSING, vol. 4, 2006, pages 711-718, XP002706052,

## Description

### Description-Art antérieur:

La présente invention concerne un procédé de traitement d'une biomasse mélangée à de l'eau pour produire de l'eau potable, du biogaz et des matières sèches combustibles selon la revendication 1 et un dispositif de traitement d'une biomasse mélangée à de l'eau pour produire de l'eau potable, du biogaz et des matières sèches combustibles selon la revendication 6.

L'homme du métier intervenant dans la présente invention doit posséder des connaissances en hydraulique, fermenteurs, traitement de biomasse et en bioénergétique.

Le brevet EP 2390235 décrit un procédé et un dispositif de traitement de déchets liquides organiques caractérisé en ce qu'un digestat issu d'un réacteur de biogaz est centrifugé dans une étape de centrifugation résultant en une fraction liquide centrifugée et une fraction concentrée centrifugée avant d'être soumise à une ultra-filtration et en ce que la fraction concentrée centrifugée est retournée au réacteur de biogaz.

Le brevet EP 2060544 décrit un procédé et un appareil de préparation de matériau pour fermentation microbiologique.

Le brevet US 6059971 décrit un procédé et un appareil pour épaissir et faire circuler des boues d'eaux usées.

Bougrier, C et Albasi, Claire et Delgenes, JP et Carrere H, Chemical engineering and processing, vol.4, 2006, pages 711 à 718 décrit les effets des prétraitements à ultrasons, thermique et à ozone sur la solubilisation des boues actives et la biodégradabilité anaérobie.

Le brevet DE 10 2004 030 482 décrit un procédé de traitement d'eaux usées provenant de la préparation et du traitement de déchets organiques (de préférence du purin) à l'aide d'un fermenteur à biogaz couplé à une ultrafiltration et une osmose inverse caractérisé en ce que lors de l'ultrafiltration des matières en suspension sont retournées dans le fermenteur à biogaz.

Le brevet US 6368849 décrit un procédé et un dispositif de traitement de déchets liquides organiques dans un fermenteur anaérobie comprenant une étape de séparation par une membrane d'ultrafiltration, une étape de retour de la fraction enrichie en méthane dans le réacteur de biogaz, une étape de traitement d'un perméat à un décapant à l'ammoniaque résultant en une fraction d'ammoniac et une fraction d'un sel nutritif et une étape de séparation de la fraction du sel nutritif dans une fraction concentrée d'un fertiliseur et une fraction d'eau.

**L'état de la technique le plus proche** est le brevet EP 2390235.

La **différence** entre le brevet EP 2390235 et la présente invention est que
∘ le fermenteur anaérobie (2,10) possède au-moins deux conduits de sortie directement reliés audit fermenteur anaérobie (2,10),
∘ le dispositif de déshydratation (16) rejette une eau de déshydratation (15) directement dans au-moins un fermenteur anaérobie (2,10),
∘ le digestat liquide broyé produit dans l'étape c) est lysé dans au moins un dispositif de lyse et
∘ qu'à l'étape f) le digestat liquide concentré broyé et lysé est retourné, au premier fermenteur anaérobie dans le cas d'un procédé comprenant un seul fermenteur anaérobie pour produire des matières sèches combustibles, et à au-moins un second fermenteur anaérobie dans le cas d'un procédé comprenant au-moins deux fermenteurs anaérobie pour produire des matières sèches combustibles et pour produire une première fraction dudit biogaz et une seconde fraction dudit biogaz, sans aucune perte de digestat liquide concentré et de digestat humide concentré broyé et lysé entre l'étape (a) et l'étape (f),
∘ et que l'étape g) est une étape de déshydration pour produire des matières sèches combustibles, au moyen d'un dispositif de déshydratation directement relié par un conduit unique d'évacuation à une sortie d'au-moins un fermenteur anaérobie, ledit digestat liquide concentré étant mélangé dans ledit au-moins un fermenteur anaérobie audit digestat humide concentré broyé et lysé lequel est réinjecté en totalité dans ledit au-moins un fermenteur anaérobie.

En fait EP 2390235 incite l'homme du métier à greffer les dispositifs (4,5,6) de la présente invention directement à la suite du dispositif de déshydratation (16) de la présente invention (*cf figure de* EP 2390235*, notamment le signe de référence (19) « separator » (correspondant au dispositif de déshydratation (16) de la présente invention) à la suite duquel se greffe tous les autres dispositifs essentiels*) sans pour autant inciter l'homme du métier à rejeter l'eau de déshydratation directement dans au-moins un fermenteur anaérobie (2 ,10), alors que dans la présente invention un découplage est effectué entre la production de matières sèches combustibles (14) et la production d'eau potable.
Or il y a un avantage à s'écarter de l'enseignement d'une seule sortie de EP 2390235 en ajoutant une deuxième sortie directement au fermenteur anaérobie (2,10) reliée à un dispositif de déshydratation (16) qui produit des matières sèches combustibles (14) et rejette une eau de déshydratation (15) directement à l'intérieur du fermenteur anaérobie (2 ,10).

Cette différence a pour **effet technique** de procurer un meilleur rendement en énergie produite par unité de biomasse par la combustion de matières sèches combustibles améliorées et un meilleur rendement en biogaz (cf tableau 2), une diminution du volume du réacteur (fermenteur) anaérobie nécessaire pour produire 1 Nm3 de biogaz par jour, une qualité d'eau recueillie au moins égale à celle de EP 2390235 .
Le tableau 2 montre une valeur de 255 Nm3 de biogaz/tonne de matières sèches pour EP 2390235 alors qu'on arrive à une valeur exceptionnellement élevée de 470 Nm3 de biogaz/tonne de matières sèches pour la présente invention.
Le tableau 2 montre une valeur de 870 KWh/tonne de matières sèches combustible pour EP 2390235 alors qu'on arrive à une valeur exceptionnellement élevée de 1650 KWh/tonne de matières sèches combustible pour la présente invention.
Partant du document EP 2390235, le **problème technique objectif** est de fournir un procédé alternatif et un dispositif alternatif ayant une efficacité améliorée pour produire des matières sèches combustibles et du biogaz tout en assurant une production d'eau potable, en utilisant au moins un réacteur anaérobie (fermenteur) de volume inférieur aux réacteurs de l'art antérieur.

La **solution** de la présente invention est de successivement broyer, séparer les fibres et particules, extraire l'eau et lyser au moins une fois un digestat concentré broyé (17) avant de retourner le digestat humide concentré broyé et lysé (37,37A,37B) à au-moins un fermenteur où il se mélangera avec le digestat liquide concentré (17) et de relier directement le dispositif de déshydratation par un conduit unique d'évacuation à une sortie d'au-moins un fermenteur pour produire des matières sèches combustibles.

**La solution n'est pas évidente** au vu du document EP 2390235 **seul.**
En effet, EP 2390235 nous apprend à la page 5 colonne 8 lignes 43 à 46 qu'un avantage important de son dispositif est que les étapes de séparation liquide/solide sont réalisées après le fermenteur de biogaz et que le procédé est continu, alors que, au contraire, dans la présente invention la production de matières sèches combustibles se fait directement à une sortie parmi les deux sorties du fermenteur, de préférence par une sortie située dans le fond du fermenteur anaérobie (càd située sous le mélangeur (36)) afin d'évacuer le digestat lourd/concentré et non pas la partie supérieure contenue dans le fermenteur qui est majoritairement liquide, par un dispositif de déshydratation directement relié par un conduit à au-moins une sortie d'un fermenteur anaérobie.
L'homme du métier partant du document EP 2390235 pourrait aussi être incité à placer un dispositif de déshydratation en fin de chaine de l'usine de traitement (cf figure de EP 2390235, notamment les numéros de référence 59 (vacuum evaporation) et 61 (solid fertillizer)), càd loin du fermenteur de biogaz, afin d'obtenir un fertilisant solide alors qu'au contraire dans la présente invention le dispositif de déshydratation est relié directement par un conduit unique d'évacuation à une sortie parmi les deux sorties d'au moins un fermenteur. Dans la présente invention un préjugé a donc été surmonté.
De plus, EP 2390235 utilise la phase solide (21) extraite, après passage dans un séparateur (19), comme composte (un composte est toujours humide, donc non sec et non combustible au contraire de la présente invention) (cf page 4 colonne 5 lignes 4-6), alors qu'au contraire dans la présente invention il n'y a aucune perte de digestat lors des étapes de traitement.
Le dispositif de déshydratation (16) de la présente invention est aussi bien plus performant pour déshydrater le digestat que le dispositif d'évaporation sous vide du document EP 2390235 (cf tableau 2). L'homme du métier n'aurait pas envisagé une telle modification du document EP 2390235 à la lumière de l'art antérieur.
L'homme du métier n'aurait pas pensé à simplifier le dispositif du document EP 2390235 pour produire des matières sèches combustibles car ce document ne possède aucun conduit d'évacuation relié directement à au moins une sortie d'un fermenteur. Comme expliqué précédemment, à la vue du document EP 2390235 l'homme du métier est fortement guidé et incité à placer le dispositif d'évaporation sous vide loin du fermenteur, sans conduit directement relié au fermenteur, et seulement après le dispositif de lavage à l'acide (39, 43).

EP 2390235 divulgue aussi dans son unique figure un dispositif de traitement de déchets liquides organiques caractérisé en ce qu'un digestat (17) issu d'un réacteur de biogaz (9) est centrifugé dans une étape de centrifugation (25) résultant en une fraction liquide centrifugée (29) et une fraction concentrée centrifugée avant d'être soumise à une ultra-filtration (31) et en ce que la fraction concentrée centrifugée (27) est retournée au réacteur (9) de biogaz, Ainsi EP 2390235 n'encourage pas à prélever un digestat liquide concentré dans le fond du réacteur (9) mais au contraire prélève un digestat liquide non concentré (17) uniquement dans la partie supérieure claire du réacteur (9). Grâce à la gravité terrestre le digestat le plus lourd (digestat liquide concentré) se déposera au fond du réacteur anaérobie alors que le digestat le plus léger (digestat liquide non concentré) se retrouvera dans la partie supérieure du fermenteur anaérobie. De plus, EP 2390235 n'utilise pas de pompe/broyeur d'un digestat liquide concentré, ni un extracteur d'eau, ni un dispositif de lyse d'un digestat liquide broyé. EP 2390235 nous apprend à la page 4 colonne 6 lignes 51 à 54 que le but de l'étape d'ultrafiltration est d'obtenir un perméat libre de particules à partir de la fraction liquide centrifugée, alors que la présente invention utilise un extracteur d'eau (6) pour arriver à la même qualité d'eau.

Même en combinant l'art antérieur le plus proche avec n'importe quel autre document de l'art antérieur, l'homme du métier n'aurait trouvé aucune incitation dans l'art antérieur pour produire des matières sèches combustibles (14) améliorées (càd issues du mélange d'un digestat liquide concentré (17) avec un digestat humide concentré broyé et lysé (37, 37A, 37B)) grâce à un dispositif de déshydratation (16) directement relié par un conduit unique d'évacuation (3B, 3E) à au-moins une sortie d'au-moins un fermenteur anaérobie (2,10), ledit digestat liquide concentré (17) étant mélangé dans ledit au-moins un fermenteur anaérobie (2,10) audit digestat humide concentré broyé et lysé (37, 37A, 37B) lequel est réinjecté en totalité dans ledit au-moins un fermenteur anaérobie (2,10) (sans aucune perte de digestat pendant le procédé de traitment) afin d'améliorer le rendement en énergie produite par unité de biomasse par la combustion de matières sèches combustibles et d'améliorer le rendement en biogaz (cf tableau 2), de diminuer le volume du réacteur (fermenteur) anaérobie nécessaire pour produire 1 Nm³ de biogaz par jour, et produire une qualité d'eau recueillie au moins égale à celle de l'art antérieur cité tout en produisant des matières sèches combustibles.
L'homme du métier n'aurait pas non plus envisagé à la vue de l'art antérieur de mélanger le digestat liquide concentré (17) avec le digestat humide concentré broyé et lysé (37, 37A, 37B) dans au moins un fermenteur anaérobie afin d'améliorer la qualité des matières sèches combustibles et notamment d'améliorer le rendement en énergie produite par unité de biomasse par la combustion de matières sèches combustibles.
On augmente le rendement en biogaz (13A,13B) du dispositif de la présente invention en ciblant les matières difficiles à digérer et à fermenter et en les broyant et en les lysant une ou plusieurs fois avant de les réinjecter dans le fermenteur anaérobie (2,10) afin de produire des matières sèches combustibles (14) améliorées et d'améliorer le rendement en biogaz (13A,13B), c'est pour cette raison que le digestat liquide concentré (17) est prélevé au fond du réacteur anaérobie (2,10) et non pas dans la partie supérieure du réacteur anaérobie (2,10).
Même si l'homme du métier avait pensé à combiner EP 2390235 avec un document de l'art antérieur le tableau 2 montre que les rendements en biogaz de la présente invention sont bien meilleurs que ceux de EP 2390235 ou DE 10 2004 030 482 ou US 6368849, ce qui prouve que la présente invention possède des caractéristiques techniques différentes de celles de l'art antérieur.

Le rendement connu en biogaz à partir de différentes cultures a été calculé selon la source IUSE en Allemagne. Le tableau 1 ci-dessous reflète les résultats connus pour différentes cultures.

**Tableau 1 :**

| Culture | Rendement brut (t/ha) | Rendement en gaz (m³/t) | Rendement en gaz (m³/ha) |
|---|---|---|---|
| Pommes de terre | 45 | 110 | 4950 |
| Grain de blé | 8 | 660 | 5280 |
| Epis de maïs | 15 | 430 | 6450 |
| Blé, plante entière | 13 | 500 | 6500 |
| Herbe | 80 | 95 | 7600 |
| Betterave fourragère | 100 | 100 | 10000 |
| Ensilage de maïs | 50 | 205 | 10250 |

| | | | |
|---|---|---|---|
| *Source : IUSE - Allemagne* | | | |

Il est aussi connu (source : IUSE - Allemagne) que le rendement en biogaz (litre normalisé de biogaz par kg) selon le type de matière organique s'étale de manière décroissante comme suit :
Grains de blé (meilleur rendement en biogaz), puis vieux pain, puis contenu d'un filtre à graisse, puis mélange d'épis de maïs, puis ensilage de maïs, puis ensilage d'herbe, puis déchets alimentaires, puis déchets biologiques municipal, puis pommes de terre, puis betterave fourragères, puis herbe fraiche du pré, puis déchet de pelures de pommes de terre, puis purin de cochons, puis purin de boeufs (plus mauvais rendement).

### Résumé de l'invention:

Le procédé de traitement d'une biomasse (1) mélangée à de l'eau pour produire de manière découplée de l'eau (12) potable et du biogaz (13A,13B) et des matières sèches combustibles (14) selon la présente invention est défini à la revendication 1 et le dispositif de traitement d'une biomasse (1) mélangée à de l'eau pour produire de manière découplée de l'eau (12) potable et du biogaz (13A,13B) et des matières sèches combustibles (14) selon la présente invention est défini à la revendication 6.
Le terme « découplé » signifie que le dispositif produit de l'eau potable (12) à une sortie différente, voire éloignée, de la sortie du biogaz (13A,13B) et de la sortie des matières sèches combustibles (14) localisées directement à la surface du fermenteur anaérobie (2,10).

Le fermenteur anaérobie (2,10) est généralement agité de manière mécanique par rotation par un mélangeur (36).
La formation de biogaz (13A,13B) dans un fermenteur anaérobie (2,10) permet de traiter des déchets variés tels que des déchets alimentaires industriels, des déchets agricoles, ou de la biomasse.
Le biogaz peut être défini comme un gaz riche en composés énergétiques, par exemple le méthane CH₄ ou l'hydrogène H₂, obtenu par biodégradation de la biomasse, généralement par voie anaérobie (càd en l'absence d'oxygène libre). La production de biogaz peut être transformée en électricité en utilisant un dispositif adéquate. Le dispositif de la présente invention consomme l'équivalent de 6 à 10% de l'électricité produite. Les recettes peuvent provenir de la vente d'électricité, de la valorisation de la chaleur produite par les générateurs, d'une redevance liée à la valorisation des déchets (de 20 à 60 €/tonne).
La biomasse est définie comme étant de la matière organique issue de la croissance ou de la multiplication d'organismes vivants (microorganismes, végétaux, animaux) par exemple les grains de blé, le vieux pain, le contenu d'un filtre à graisse, les épis de maïs, les ensilages de maïs, les ensilages d'herbe, les déchets alimentaires, les déchets biologiques municipaux, les pommes de terre, les betteraves fourragères, la paille, l'herbe fraiche du pré, les déchets des pelures de pommes de terre, le purin du bétail (cochons, vaches, boeufs), les déchets verts, les récoltes ou ensilages de plantes cultivées, les matières organiques des déchets ménagers ou industriels, algues, sous-produits animaux, seuls ou en mélange. La biomasse peut aussi être définie comme l'ensemble des microorganismes cultivés dans un réacteur biologique (par exemple un fermenteur anaérobie mésophile ou thermophile).

Les matières en suspension sont définies comme étant des matières contenues dans un fluide aqueux et retenues sur un filtre de seuil de coupure égal à 0,10 ou 0,45 micron (la méthode de mesure est normée).
La matière sèche est définie comme étant une matière d'un fluide aqueux autre que l'eau, mesurée après séchage en étuve à 110°C (la méthode de mesure est normée).

L'invention est inventive en ce que :
- la quantité et la qualité de l'eau (potable) extraite ne dépendent pas de la qualité du digestat, elles sont maitrisables par la conception, le dimensionnement et le pilotage du module d'extraction,
- l'énergie requise pour l'extraction est compensée par le supplément d'énergie obtenue sur le dispositif grâce à l'extraction d'eau intégrée,
- le système de conduite avancée porte simultanément sur l'optimisation des flux hydrauliques et sur l'optimisation énergétique,
- on peut agir conjointement sur la biodégradabilité et la filtrabilité,
- on augmente l'efficacité du dispositif en ciblant les matières difficiles à digérer et à fermenter et en les broyant et en les lysant une ou plusieurs fois avant de les réinjecter dans le fermenteur anaérobie (2,10) afin d'améliorer le rendement en biogaz (13A,13B), c'est pour cette raison que le digestat liquide concentré (17) est prélevé au fond du réacteur anaérobie (2,10) et non pas dans la partie supérieure du réacteur anaérobie (2,10).

La Struvite susceptible d'être obtenue par le procédé de la présente invention à chaque sortie de l'extracteur d'eau (6) au niveau des conduits (39,42) et en amont de l'extracteur d'eau (6) au niveau de la conduite (41). La pureté de la struvite est élevée au niveau du conduit (42) et est de qualité classique au niveau des conduits (39) et (41).

La présente invention concerne un procédé de traitement d'une biomasse (1) mélangée à de l'eau pour produire de manière découplée de l'eau potable (12) et du biogaz (13A,13B) et des matières sèches combustibles (14), ladite eau potable (12) ne contenant aucune matière en suspension et ayant une teneur en matière sèche inférieure à 1%, inférieure à 0,9%, inférieure à 0,8%, inférieure à 0,7%, inférieure à 0,6%, inférieure à 0,5%, inférieure à 0,4%, inférieure à 0,3%, inférieure à 0,2%, inférieure à 0,1% ledit procédé comprenant successivement les étapes suivantes:
(a) soumettre ladite biomasse (1) mélangée à de l'eau à une fermentation anaérobie dans au-moins un premier fermenteur anaérobie (2) comprenant au-moins deux conduits de sortie (3a ;3b) directement reliés audit premier fermenteur anaérobie (2), résultant en un digestat liquide concentré (17) et en du biogaz (13A), et
(b) pomper et broyer ledit digestat liquide concentré (17) au moyen d'au-moins une pompe/broyeur (4) résultant en un digestat liquide concentré broyé (27), et
(c) séparer (5) les fibres et les particules dudit digestat liquide concentré broyé (27) pour obtenir d'une part une eau clarifiée (24) mélangée à un reliquat d'un digestat liquide broyé (25A) et d'autre part un digestat humide concentré broyé (25B) lequel passera dans au moins un dispositif de lyse (18C,18B),
(d) faire passer ladite eau clarifiée (24) mélangée à un reliquat d'un digestat liquide broyé (25A) dans au-moins un extracteur d'eau (6) pour obtenir d'une part de l'eau potable (12) et d'autre part ledit reliquat d'un digestat liquide broyé (25A) lequel passera dans au moins un dispositif de lyse (18A, 18B), puis ensuite
(e) obtenir un digestat humide concentré broyé et lysé (37) issu du mélange lysé du reliquat du digestat liquide broyé (25A) avec le digestat humide concentré broyé (25B),
(f) retourner ledit digestat humide concentré broyé et lysé (37,37A,37B), sans aucune perte de celui-ci,
   - au premier fermenteur anaérobie (2) dans le cas d'un procédé comprenant un seul fermenteur anaérobie (2) pour produire les matières sèches combustibles (14) et pour produire ledit biogaz (13A),
   - et à au-moins un second fermenteur anaérobie (10), comprenant au-moins deux conduits de sortie (3E ;3f) directement reliés audit second fermenteur anaérobie (10), dans le cas d'un procédé comprenant au-moins deux fermenteurs anaérobie (2,10) pour produire les matières sèches combustibles (14) et pour produire une première fraction (13A) dudit biogaz et une seconde fraction (13B) dudit biogaz,
(g) déshydrater pour produire lesdites matières sèches combustibles (14), au moyen d'un dispositif de déshydratation (16) recevant d'une part ledit digestat liquide concentré (17) mélangé audit digestat humide concentré broyé et lysé (37,37A,37B) et rejetant d'autre part une eau de déshydratation (15) par au-moins un conduit (15A) directement dans au-moins un fermenteur anaérobie (2,10), ledit dispositif de déshydratation (16) étant directement relié par au-moins un conduit unique d'évacuation (3B,3E) à au moins une sortie dudit premier fermenteur anaérobie (2) dans le cas d'un dispositif comprenant un seul fermenteur anaérobie (2) et étant directement relié par au-moins un conduit unique d'évacuation (3B,3E) à au moins une sortie dudit second fermenteur anaérobie (10) dans le cas d'un dispositif comprenant au moins deux fermenteurs anaérobie (2,10),ledit digestat liquide concentré (17) étant mélangé dans ledit au-moins un fermenteur anaérobie (2,10) audit digestat humide concentré broyé et lysé (37, 37A, 37B) après réinjection en totalité dudit digestat humide concentré broyé et lysé (37, 37A, 37B) dans au-moins un fermenteur anaérobie (2,10).

A l'étape a) dudit procédé ledit digestat liquide concentré (17) repose au fond dudit au-moins un premier fermenteur anaérobie (2), et à l'étape b) le pompage dudit digestat liquide concentré (17) est réalisé depuis le fond dudit au-moins un premier fermenteur anaérobie (2) pour être amené vers ladite au-moins une pompe/broyeur (4). Le procédé de la présente invention produit de l'eau potable (12) au moyen du conduit (42) relié audit au-moins un extracteur d'eau (6) et après passage de ladite eau clarifiée (24) mélangée à un reliquat d'un digestat liquide broyé (25A) dans ledit audit au-moins un extracteur d'eau (6). Ladite eau potable (12) possède de préférence une teneur en matière sèche inférieure à 0,5%, plus préférentiellement inférieure à 0,4%. Le procédé de la présente invention comprend au-moins une étape supplémentaire mise en oeuvre au niveau du conduit (42) relié audit au-moins un extracteur d'eau (6), ladite étape supplémentaire étant une étape de contrôle de la qualité d'eau extraite au moyen de la turbidité et de la conductivité. Le procédé de la présente invention comprend au-moins une étape supplémentaire mise en oeuvre au niveau d'un conduit (3a) relié audit au-moins un premier fermenteur anaérobie (2), ladite étape supplémentaire étant une étape de contrôle de la qualité de la biomasse au moyen de la viscosité et d'une mesure rapide de la biodégradabilité.
De la struvite est susceptible d'être obtenue par le procédé de la présente invention, laquelle struvite est obtenue à chaque sortie de l'extracteur d'eau (6) au niveau des conduits (39,42) et en amont de l'extracteur d'eau (6) au niveau de la conduite (41).

Les matières sèches (14) sont de préférence combustibles mais elles peuvent aussi être humidifiables ou compostables.

La présente invention concerne un dispositif de traitement d'une biomasse (1) mélangée à de l'eau pour produire de manière découplée de l'eau potable (12) et du biogaz (13A, 13B) et des matières sèches combustibles (14), ledit dispositif comprenant:
(i) au-moins un premier fermenteur anaérobie (2) comprenant au-moins deux conduits de sortie (3a ;3b) directement reliés audit premier fermenteur anaérobie (2), lequel recevant la biomasse (1) mélangée à de l'eau et produisant du biogaz (13A) par fermentation d'un digestat liquide concentré (17),
(ii) au-moins une pompe/broyeur (4) pour pomper et broyer ledit digestat liquide concentré (17) résultant en un digestat liquide broyé (27), ladite pompe/broyeur (4) étant directement reliée audit premier fermenteur anaérobie (2) par le conduit de sortie (3a),
(iii) au-moins un séparateur de fibres et particules (5) pour séparer d'une part une eau clarifiée (24) mélangée à un reliquat d'un digestat liquide broyé (25A), et d'autre part un digestat humide concentré broyé (25B) lequel passera dans au moins un dispositif de lyse (18C,18B), ledit séparateur de fibres et particules (5) étant directement relié à ladite pompe/broyeur (4),
(iv) au-moins un extracteur d'eau (6) dans lequel entre ladite eau clarifiée (24) mélangée audit reliquat d'un digestat liquide broyé (25A) et qui extrait d'une part de l'eau potable (12) et d'autre part ledit reliquat d'un digestat liquide broyé (25A), ledit extracteur d'eau (6) étant directement relié audit séparateur de fibres et particules (5),
(v) ledit au-moins un dispositif de lyse (18A,18B,18C) adapté pour lyser ledit reliquat d'un digestat liquide broyé (25A) et ledit digestat humide concentré broyé (25B) et un digestat humide concentré broyé et lysé (37) étant issu du mélange lysé dudit reliquat d'un digestat liquide broyé (25A) avec ledit digestat humide concentré broyé (25B), ledit dispositif de lyse (18A,18B) étant directement relié audit extracteur d'eau (6) et ledit dispositif de lyse (18C) étant directement relié audit séparateur de fibres et particules (5),
(vi) au moins un conduit (40A, 40B) permettant à un digestat humide concentré broyé et lysé (37,37A, 37B) de sortir dudit dispositif de lyse (18B) et d'être retourné sans aucune perte de celui-ci,
   - au premier fermenteur anaérobie (2) dans le cas d'un dispositif comprenant un seul fermenteur anaérobie (2) pour produire ledit biogaz (13A) et lesdites matières sèches combustibles (14),
   - et à au-moins un second fermenteur anaérobie (10) comprenant au-moins deux conduits de sortie (3E ;3f) directement reliés audit second fermenteur anaérobie (10), lequel recevant d'une part ledit digestat liquide concentré (17) par un conduit (3c) directement relié au premier fermenteur anaérobie (2), et recevant d'autre part ledit digestat humide concentré broyé et lysé (37,37A,37B) ainsi qu'une eau de déshydratation (15) dans le cas d'un dispositif comprenant au-moins deux fermenteurs anaérobie (2,10) pour produire une première (13A) et une seconde fraction (13B) dudit biogaz,
(vii) au-moins un dispositif de déshydratation (16) recevant ledit digestat liquide concentré (17) mélangé audit digestat humide concentré broyé et lysé (37,37A,37B) et produisant d'une part lesdites matières sèches combustibles (14), ledit dispositif de déshydratation (16) rejetant d'autre part par au-moins un conduit (15A) ladite eau de déshydratation (15) directement dans au-moins un fermenteur anaérobie (2 ;10), ledit dispositif de déshydratation (16) étant directement relié par au-moins un conduit unique d'évacuation (3B,3E) à au moins une sortie dudit premier fermenteur anaérobie (2) dans le cas d'un dispositif comprenant un seul fermenteur anaérobie (2) et étant directement relié par au-moins un conduit unique d'évacuation (3B,3E) à au moins une sortie dudit second fermenteur anaérobie (10) dans le cas d'un dispositif comprenant au moins deux fermenteurs anaérobie (2,10), ledit digestat liquide concentré (17) étant mélangé dans au-moins un fermenteur anaérobie (2,10) audit digestat humide concentré broyé et lysé (37, 37A, 37B) après réinjection en totalité dudit digestat humide concentré broyé et lysé (37, 37A, 37B) dans ledit au-moins un fermenteur anaérobie (2,10).

Dans le dispositif de la présente invention au-moins un conduit (3a) permet audit digestat liquide concentré (17) de sortir du fond dudit au-moins un premier fermenteur anaérobie (2) et d'entrer dans ladite au-moins une pompe/broyeur (4). Au-moins un séparateur de fibres et particules (5) reçoit un digestat liquide broyé (27) et rejette d'une part un digestat humide concentré broyé (25B) et d'autre part de l'eau clarifiée (24) mélangée à un reliquat d'un digestat liquide broyé (25A), ledit au-moins un séparateur de fibres et particules (5) étant relié à ladite au-moins une pompe/broyeur (4) par au moins un conduit (38) et étant relié audit au-moins un extracteur d'eau (6) par au moins un conduit (41). Dans le cas d'un dispositif comprenant deux fermenteurs anaérobie (2,10), où ledit au-moins un premier fermenteur anaérobie (2) produit une première partie du biogaz (13A) et où ledit au-moins un second fermenteur anaérobie (10) produit une seconde partie du biogaz (13B), ledit second fermenteur anaérobie (10) étant relié audit dispositif de lyse (18A, 18B, 18C) par au moins un conduit (40A) et ledit premier fermenteur anaérobie (2) étant relié audit dispositif de lyse (18A, 18B, 18C) par au moins un conduit (40B). Le dispositif de lyse (18C) est relié audit au-moins un séparateur de fibres et particules (5) par au moins un conduit (8). Le dispositif de lyse (18A) est relié audit au-moins un extracteur d'eau (6) par au moins un conduit (39) et le dispositif de lyse (18B) est relié aux dispositifs de lyse (18A,18C) par un conduit . Dans le cas d'un dispositif comprenant au-moins deux fermenteurs anaérobie (2,10) ledit second fermenteur anaérobie (10) est relié au fond dudit premier fermenteur anaérobie (2) par au moins un conduit (3c) conduisant ledit digestat liquide concentré (17) vers ledit second fermenteur anaérobie (10).
Ledit au-moins un séparateur de fibres et particules (5) produit d'une part ladite fraction d'eau clarifiée (24) mélangée audit reliquat d'un digestat liquide broyé (25A) sortant dudit au-moins un séparateur de fibres et particules (5) par au moins un conduit (41) et d'autre part ledit digestat humide concentré broyé (25B) sortant dudit au-moins un séparateur de fibres et particules (5) par au moins un conduit (8) et, ledit digestat humide concentré broyé (25B) étant soit injecté par le conduit (11) dans ladite au-moins une pompe/broyeur (4) lorsque au-moins un moyen de dérivation (23) renvoie le digestat humide concentré broyé (25B) vers ladite au-moins une pompe/broyeur (4) au moyen du conduit (11), ou soit injecté par le conduit (8) à l'intérieur dudit au moins un dispositif de lyse (18C) lorsque ledit au-moins un moyen de dérivation (23) renvoie le digestat humide concentré broyé (25B) vers ledit au moins un dispositif de lyse (18C), soit injecté simultanément dans ladite au-moins une pompe/broyeur (4) et dans ledit dispositif de lyse (18C), lorsque ledit au-moins un moyen de dérivation (23) renvoie le digestat humide concentré broyé (25B) vers ladite pompe/broyeur (4) et vers ledit un dispositif de lyse (18C). Au-moins un conduit d'extraction de biogaz (21) extrait le biogaz (13A) à partir de la partie supérieure dudit au-moins un premier fermenteur anaérobie (2) lorsque au-moins un moyen de dérivation (19) renvoie un digestat humide concentré broyé et au-moins doublement lysé (37B) par au moins un conduit (40B) dans ledit au-moins un premier fermenteur anaérobie (2). Au-moins un conduit d'extraction de biogaz (21) extrait une première partie du biogaz (13A) à partir de la partie supérieure dudit au-moins un premier fermenteur anaérobie (2) et extrait aussi une seconde partie du biogaz (13B) à partir de la partie supérieure dudit au-moins un second fermenteur anaérobie (10) par un conduit (20) lorsque ledit au-moins un moyen de dérivation (19) renvoie simultanément un digestat humide concentré broyé et au-moins doublement lysé (37A,37B) vers ledit premier fermenteur anaérobie (2) et vers ledit second fermenteur anaérobie (10). Le dispositif de la présente invention peut comprendre au-moins une pompe/broyeur (4) immergée à l'intérieur dudit au-moins un premier fermenteur anaérobie (2). Le dispositif de la présente invention comprend au moins un dispositif de déshydratation (16) relié par un conduit (15A) audit premier fermenteur anaérobie (2) dans le cas d'un dispositif comprenant un seul fermenteur anaérobie (2) et au moins un dispositif de déshydratation (16) relié par un conduit (15A) audit second fermenteur anaérobie (10) dans le cas d'un dispositif comprenant au moins deux fermenteurs anaérobie (2,10). Une eau de déshydratation (15) issue dudit au moins un dispositif de déshydratation (16) est recyclée vers ledit au moins un fermenteur anaérobie (2,10) par au moins un conduit (15A).

La présente invention est accompagnée de deux figures :
La figure 1 montre un dispositif de traitement d'une biomasse (1) mélangée à de l'eau pour produire de manière découplée de l'eau potable (12) et du biogaz (13A) et des matières sèches combustibles (14) en utilisant un seul réacteur anaérobie (2).
La figure 2 montre un dispositif de traitement d'une biomasse (1) mélangée à de l'eau pour produire de manière découplée de l'eau potable (12) et du biogaz (13A, 13B) et des matières sèches combustibles (14) en utilisant deux réacteurs anaérobie (2,10).

### Résumé détaillé de l'invention:

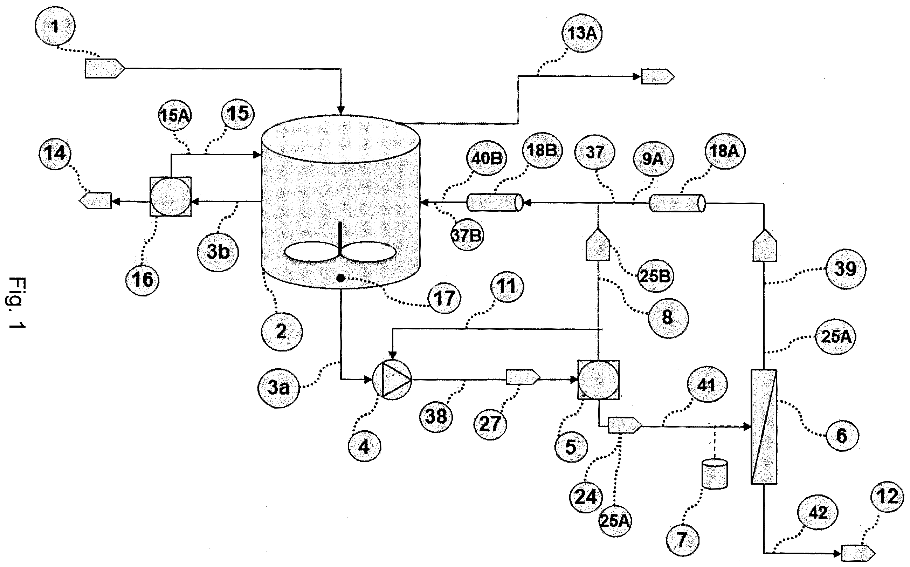

Dans un premier mode de réalisation (figure 1) une biomasse (1) mélangée à de l'eau est introduite dans un réacteur anaérobie (2) pour produire de manière découplée de l'eau potable (12) et du biogaz (13A) et des matières sèches combustibles (14). La dite biomasse enfermée dans le réacteur anaérobie (2) est mélangée avec des bactéries anaérobies et produit du biogaz (13A) par fermentation. Un digestat liquide concentré (17) est pompé dans le fond du réacteur (2) via un conduit (3a) et ledit digestat liquide concentré (17) entre alors dans une pompe/broyeur (4) qui pompe et broie ledit digestat liquide concentré (17). Un digestat liquide broyé (27) sort de la pompe/broyeur (4) et entre via le conduit (38) dans un séparateur de fibres et particules (5) qui sépare d'une part une eau clarifiée (24) mélangée à un reliquat d'un digestat liquide broyé (25A), et d'autre part un digestat humide concentré broyé (25B) lequel subira une lyse dans un dispositif de lyse (18B) via le conduit (8) qui rejoint le conduit (9A) ou alors le digestat humide concentré broyé (25B) peut être injecté via le conduit (11) à l'intérieur de la pompe/broyeur (4) pour effectuer un broyage supplémentaire avant d'être lysé dans le dispositif de lyse (18B). Un conduit (41) amène l'eau clarifiée (24) mélangée à un reliquat d'un digestat liquide broyé (25A) dans un extracteur d'eau (6). Une préparation physico-chimique (7) peut se greffer sur le conduit (41). L' extracteur d'eau (6) extrait d'une part de l'eau potable (12) via le conduit (42) et d'autre part ledit reliquat d'un digestat liquide broyé (25A) via le conduit (39) qui amène ledit reliquat d'un digestat liquide broyé (25A) vers un premier dispositif de lyse (18A) qui lyse une première fois ledit reliquat d'un digestat liquide broyé (25A) et qui entre ensuite via le conduit (9A) dans un second dispositif de lyse (18B) pour effectuer une seconde lyse. Un digestat humide broyé et au-moins doublement lysé (37B) sort ensuite par le conduit (40B) avant de rejoindre le volume intérieur du réacteur anaérobie (2) afin d'alimenter celui-ci en digestat humide broyé et doublement lysé (37B) pour améliorer le rendement en biogaz (13A) lors de la fermentation anaérobie. En effet, plus le digestat est broyé et/ou lysé, plus facilement il sera dégradé par les bactéries anaérobies du réacteur (2) et produira ainsi davantage de biogaz (13A).
Un dispositif de déshydratation (16) reçoit ledit digestat liquide concentré (17) via le conduit (3b) et produit d'une part lesdites matières sèches combustibles (14) et d'autre part ladite eau de déshydratation (15) qui est amenée via le conduit (15A) audit réacteur anaérobie (2).

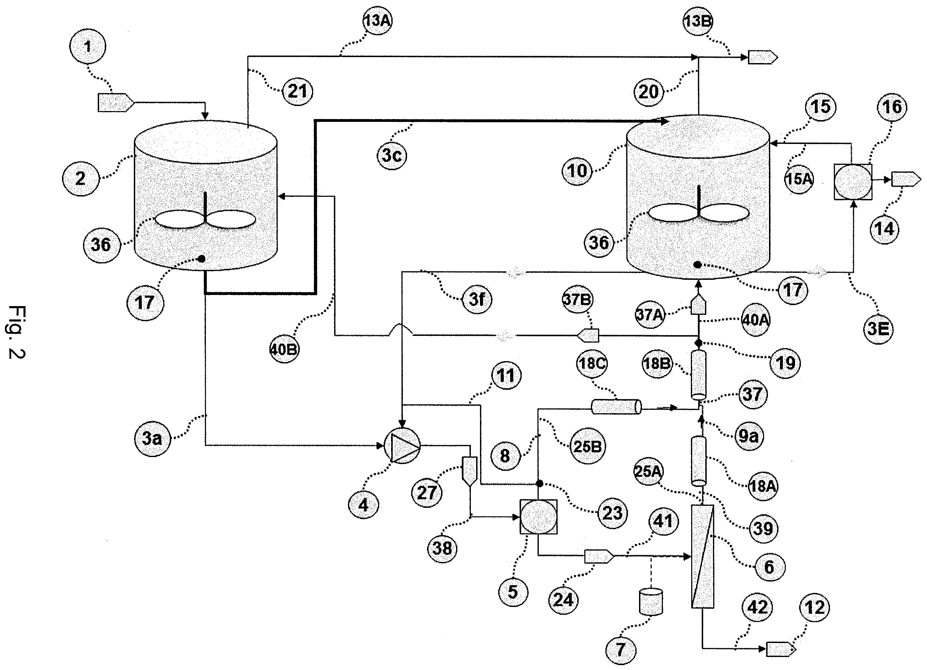

Dans un second mode de réalisation (figure 2) une biomasse (1) mélangée à de l'eau est introduite dans un réacteur anaérobie (2) pour produire de manière découplée de l'eau potable (12) et du biogaz (13A,13B) et des matières sèches combustibles (14). La dite biomasse (1) enfermée dans le réacteur anaérobie (2) est mélangée par un mélangeur (36) avec des bactéries anaérobies et produit du biogaz (13A) par fermentation via le conduit (21). Un digestat liquide concentré (17) est pompé dans le fond du réacteur (2) via un conduit (3a) avant d'entrer dans une pompe/broyeur (4) qui pompe et broie ledit digestat liquide concentré (17). Un conduit (3c) peut aussi amener ledit digestat liquide concentré (17) à l'intérieur d'un second fermenteur anaérobie (10) afin d'alimenter celui-ci en digestat liquide concentré (17).
Un digestat liquide broyé (27) sort de la pompe/broyeur (4) et entre via le conduit (38) dans un séparateur de fibres et particules (5) qui sépare d'une part une eau clarifiée (24) mélangée à un reliquat d'un digestat liquide broyé (25A), et d'autre part un digestat humide concentré broyé (25B) lequel subira une première lyse dans un dispositif de lyse (18C) via le conduit (8) qui rejoint, après lyse, le conduit (9A) lorsque le moyen de dérivation (23) renvoie le digestat humide concentré broyé (25B) vers ledit au moins un dispositif de lyse (18C), ou alors le digestat humide concentré broyé (25B) peut être injecté via le conduit (11) à l'intérieur de la pompe/broyeur (4) pour effectuer un broyage supplémentaire lorsque le moyen de dérivation (23) renvoie le digestat humide concentré broyé (25B) vers la pompe/broyeur (4), avant d'être lysé dans le dispositif de lyse (18C). Le moyen de dérivation (23) peut aussi renvoyer simultanément le digestat humide concentré broyé (25B) vers ledit au moins un dispositif de lyse (18C) et vers ladite pompe/broyeur (4). Un conduit (41) amène l'eau clarifiée (24) mélangée à un reliquat d'un digestat liquide broyé (25A) dans un extracteur d'eau (6). Une préparation physico-chimique (7) peut se greffer sur le conduit (41). L' extracteur d'eau (6) extrait d'une part de l'eau potable (12) via le conduit (42) et extrait d'autre part ledit reliquat d'un digestat liquide broyé (25A) via le conduit (39) qui amène ledit reliquat d'un digestat liquide broyé (25A) vers un premier dispositif de lyse (18A) qui lyse une première fois ledit reliquat d'un digestat liquide broyé (25A) pour donner un digestat humide concentré broyé et lysé (37) (issu du mélange lysé du reliquat du digestat liquide broyé (25A) avec le digestat humide concentré broyé (25B)), lequel digestat humide concentré broyé et lysé (37) entre ensuite via le conduit (9A) dans un second dispositif de lyse (18B) pour effectuer une seconde lyse. Un digestat humide broyé et au-moins doublement lysé (37B) sort ensuite par le conduit (40B) avant de rejoindre le volume intérieur du réacteur anaérobie (2) afin d'alimenter celui-ci en digestat humide broyé et au-moins doublement lysé (37B) pour améliorer le rendement en biogaz (13A) lors de la fermentation anaérobie. En effet, plus le digestat est broyé et/ou lysé, plus facilement il sera dégradé par les bactéries anaérobies du réacteur (2) et produira ainsi davantage de biogaz (13A). Le moyen de dérivation (19) peut aussi renvoyer soit simultanément un digestat humide concentré broyé et au-moins doublement lysé (37A,37B) vers ledit premier fermenteur anaérobie (2) via le conduit (40B) et vers ledit second fermenteur anaérobie (10) via le conduit (40A) afin de produire du biogaz (13B) via le conduit (20), ou de manière indépendante uniquement vers soit le premier fermenteur anaérobie (2) via le conduit (40B) ou uniquement soit vers le second fermenteur anaérobie (10) via le conduit (40A). Un dispositif de déshydratation (16) reçoit ledit digestat liquide concentré (17) du fond du second fermenteur anaérobie (10) via le conduit (3E) et produit d'une part lesdites matières sèches combustibles (14) et d'autre part ladite eau de déshydratation (15) qui est amenée via le conduit (15A) audit second réacteur anaérobie (10). Un dispositif de déshydratation (16) identique à celui greffé au second fermenteur anaérobie (10) peut aussi être greffé au premier fermenteur anaérobie (2) afin de produire lesdites matières sèches combustibles (14).
Le digestat liquide concentré (17) issu du fond du second fermenteur anaérobie (10) peut aussi être directement injecté via le conduit (3f) dans la pompe/broyeur (4).
Le dispositif de la figure 2 produira plus de biogaz que celui de la figure 1.

Certaines caractéristiques de l'invention qui sont décrites sous forme de mode de réalisation séparés, peuvent aussi être fournies en combinaison dans un mode de réalisation unique. A l'opposé certaines caractéristiques de l'invention qui sont décrites sous forme de mode de réalisation en combinaison dans un mode de réalisation unique, peuvent aussi être fournies séparément sous forme de plusieurs modes de réalisation séparés.

Bien que l'invention ait été décrite en conjonction avec des modes de réalisation spécifiques de celui-ci, il est évident que plusieurs alternatives, modifications et variations peuvent être détectées par un homme du métier. Ainsi, nous avons l'intention d'englober de telles alternatives, modifications et variations qui tombent dans la portée des revendications ci-après.

### Tests comparatifs :

Les tests comparatifs du tableau 2 ont été effectués en utilisant une quantité de biomasse identique (400 kg à 500 kg d'herbes de prés) qui ont été introduits dans le réacteur anaérobie (fermenteur) de la présente invention (alternative 1 : un seul réacteur anaérobie sans dispositif de lyse, càd le dispositif de la figure 1 où les dispositifs de lyse ont été éliminés ; alternative 2 : un seul réacteur anaérobie avec au moins un dispositif de lyse, cf le dispositif de la figure 1), ainsi que dans le réacteur anaérobie de chacun des dispositifs de l'art antérieur (cf tableau 2). Tous les réacteurs anaérobies mentionnés dans le tableau 2 contiennent une quantité d'eau identique.
Les unités reprises dans le tableau 2 correspondent à des normes internationalement reconnues.

**Tableau 2 :**

| **Critères:** | | | | **Arts antérieurs:** | | | | **Présente Invention:** | |
|---|---|---|---|---|---|---|---|---|---|
| | **Unités** | **Valeur Minimum ou la Pire** | **Valeur Maximum ou la meilleure** | **Technologie normalisée en Allemagne** | EP 2390235 A1 | DE 102004 030482 A1 | **Brevet** US 6,398,849 B1 | **Sans dispositif de lyse** | **Avec un dispositif de lyse** |
| **Matières premières admissibles pour produire le biogaz** | **Biomasse utilisée** | | | herbe + eau | herbe + eau | herbe + eau | herbe + eau | herbe + eau | herbe + eau |
| **Volume de biogaz par unité de biomasse Réf.: ISO 11734 ; article de Angelidaki & Sanders, 2004** | **Nm³ de biogaz /tonne de Matières Sèches** | 150 | 500 | 230 | 255 | 248 | 220 | 405 | 470 |
| **Energie produite par unité de biomasse par la combustion de matières sèches combustibles** | **kWh/ tonne de Matières Sèches combustibles** | 2 | 2500 | 780 | 870 | 838 | 600 | 1300 | 1650 |
| **Volume du réacteur anaérobie pour produire 1 Nm3 de biogaz par jour Réf.: OE NORM S 2207-1 et 2207-2** | **m³** | 2,3 | 0,5 | 1,2 | 1,5 | 1,6 | 2 | 0.7 | 0.6 |
| **Qualité de l'eau après traitement (directives UE 91/271/CE et 98/15/CE)** | **Qualité de l'eau après traitement** | A | F | A | E,F | E,F | E,F | E,F | E,F |

## Revendications

1. **Procédé** de traitement d'une biomasse (1) mélangée à de l'eau pour produire de manière découplée des matières sèches combustibles (14), de l'eau potable (12), et du biogaz (13A,13B),
ladite eau potable (12) ne contenant aucune matière en suspension et ayant une teneur en matière sèche strictement inférieure à 1%,
ledit procédé comprenant successivement les étapes suivantes:
(a) soumettre ladite biomasse (1) mélangée à de l'eau à une fermentation anaérobie dans au-moins un premier fermenteur anaérobie (2) comprenant au-moins deux conduits de sortie (3a ;3b) directement reliés audit premier fermenteur anaérobie (2), résultant en un digestat liquide concentré (17) et en du biogaz (13A), et
(b) pomper et broyer ledit digestat liquide concentré (17) au moyen d'au-moins une pompe/broyeur (4) résultant en un digestat liquide concentré broyé (27), et
(c) séparer (5) les fibres et les particules dudit digestat liquide concentré broyé (27) pour obtenir d'une part une eau clarifiée (24) mélangée à un reliquat d'un digestat liquide broyé (25A) et d'autre part un digestat humide concentré broyé (25B) lequel passera dans au moins un dispositif de lyse (18C,18B),
(d) faire passer ladite eau clarifiée (24) mélangée à un reliquat d'un digestat liquide broyé (25A) dans au-moins un extracteur d'eau (6) pour obtenir d'une part de l'eau potable (12) et d'autre part ledit reliquat d'un digestat liquide broyé (25A) lequel passera dans au moins un dispositif de lyse (18A, 18B), puis ensuite
(e) obtenir un digestat humide concentré broyé et lysé (37) issu du mélange lysé du reliquat du digestat liquide broyé (25A) avec le digestat humide concentré broyé (25B),
(f) retourner ledit digestat humide concentré broyé et lysé (37,37A,37B), sans aucune perte de celui-ci,
- au premier fermenteur anaérobie (2) dans le cas d'un procédé comprenant un seul fermenteur anaérobie (2) pour produire les matières sèches combustibles (14) et pour produire ledit biogaz (13A),
- et à au-moins un second fermenteur anaérobie (10), comprenant au-moins deux conduits de sortie (3E ;3f) directement reliés audit second fermenteur anaérobie (10), dans le cas d'un procédé comprenant au-moins deux fermenteurs anaérobie (2,10) pour produire les matières sèches combustibles (14) et pour produire une première fraction (13A) dudit biogaz et une seconde fraction (13B) dudit biogaz,
(g) déshydrater pour produire lesdites matières sèches combustibles (14), au moyen d'un dispositif de déshydratation (16) recevant d'une part ledit digestat liquide concentré (17) mélangé audit digestat humide concentré broyé et lysé (37,37A,37B) et rejetant d'autre part une eau de déshydratation (15) par au-moins un conduit (15A) directement dans au-moins un fermenteur anaérobie (2,10), ledit dispositif de déshydratation (16) étant directement relié par au-moins un conduit unique d'évacuation (3B,3E) à au moins une sortie dudit premier fermenteur anaérobie (2) dans le cas d'un dispositif comprenant un seul fermenteur anaérobie (2) et étant directement relié par au-moins un conduit unique d'évacuation (3B,3E) à au moins une sortie dudit second fermenteur anaérobie (10) dans le cas d'un dispositif comprenant au moins deux fermenteurs anaérobie (2,10),ledit digestat liquide concentré (17) étant mélangé dans ledit au-moins un fermenteur anaérobie (2,10) audit digestat humide concentré broyé et lysé (37, 37A, 37B) après réinjection en totalité dudit digestat humide concentré broyé et lysé (37, 37A, 37B) dans au-moins un fermenteur anaérobie (2,10).

2. Procédé selon la revendication 1, dans lequel
à l'étape a) ledit digestat liquide concentré (17) repose au fond dudit au-moins un premier fermenteur anaérobie (2), et
à l'étape b) le pompage dudit digestat liquide concentré (17) est réalisé depuis le fond dudit au-moins un premier fermenteur anaérobie (2) pour être amené vers ladite au-moins une pompe/broyeur (4).

3. Procédé selon la revendication 3, comprenant au-moins une étape supplémentaire mise en oeuvre au niveau du conduit (42) relié audit au-moins un extracteur d'eau (6), ladite étape supplémentaire étant une étape de contrôle de la qualité d'eau extraite au moyen de la turbidité et de la conductivité.

4. Procédé selon la revendication 1, comprenant au-moins une étape supplémentaire mise en oeuvre au niveau d'un conduit (3a) relié audit au-moins un premier fermenteur anaérobie (2), ladite étape supplémentaire étant une étape de contrôle de la qualité de la biomasse au moyen de la viscosité et d'une mesure rapide de la biodégradabilité.

5. **Dispositif** de traitement d'une biomasse (1) mélangée à de l'eau pour produire de manière découplée des matières sèches combustibles (14), de l'eau potable (12), et du biogaz (13A, 13B), ledit dispositif comprenant:
(i) au-moins un premier fermenteur anaérobie (2) comprenant au-moins deux conduits de sortie (3a ;3b) directement reliés audit premier fermenteur anaérobie (2), lequel recevant la biomasse (1) mélangée à de l'eau et produisant du biogaz (13A) par fermentation d'un digestat liquide concentré (17),
(ii) au-moins une pompe/broyeur (4) pour pomper et broyer ledit digestat liquide concentré (17) résultant en un digestat liquide broyé (27), ladite pompe/broyeur (4) étant directement reliée audit premier fermenteur anaérobie (2) par le conduit de sortie (3a),
(iii) au-moins un séparateur de fibres et particules (5) pour séparer
d'une part une eau clarifiée (24) mélangée à un reliquat d'un digestat liquide broyé (25A), et d'autre part un digestat humide concentré broyé (25B) lequel passera dans au moins un dispositif de lyse (18C,18B), ledit séparateur de fibres et particules (5) étant directement relié à ladite pompe/broyeur (4),
(iv) au-moins un extracteur d'eau (6) dans lequel entre ladite eau clarifiée (24) mélangée audit reliquat d'un digestat liquide broyé (25A) et qui extrait d'une part de l'eau potable (12) et d'autre part ledit reliquat d'un digestat liquide broyé (25A), ledit extracteur d'eau (6) étant directement relié audit séparateur de fibres et particules (5),
(v) ledit au-moins un dispositif de lyse (18A,18B,18C) adapté pour lyser ledit reliquat d'un digestat liquide broyé (25A) et ledit digestat humide concentré broyé (25B) et un digestat humide concentré broyé et lysé (37) étant issu du mélange lysé dudit reliquat d'un digestat liquide broyé (25A) avec ledit digestat humide concentré broyé (25B), ledit dispositif de lyse (18A,18B) étant directement relié audit extracteur d'eau (6) et ledit dispositif de lyse (18C) étant directement relié audit séparateur de fibres et particules (5),
(vi) au moins un conduit (40A, 40B) permettant à un digestat humide concentré broyé et lysé (37,37A, 37B) de sortir dudit dispositif de lyse (18B) et d'être retourné sans aucune perte de celui-ci,
- au premier fermenteur anaérobie (2) dans le cas d'un dispositif comprenant un seul fermenteur anaérobie (2) pour produire ledit biogaz (13A) et lesdites matières sèches combustibles (14),
- et à au-moins un second fermenteur anaérobie (10) comprenant au-moins deux conduits de sortie (3E ;3f) directement reliés audit second fermenteur anaérobie (10), lequel recevant d'une part ledit digestat liquide concentré (17) par un conduit (3c) directement relié au premier fermenteur anaérobie (2), et recevant d'autre part ledit digestat humide concentré broyé et lysé (37,37A,37B) ainsi qu'une eau de déshydratation (15) dans le cas d'un dispositif comprenant au-moins deux fermenteurs anaérobie (2,10) pour produire une première (13A) et une seconde fraction (13B) dudit biogaz,
(vii) au-moins un dispositif de déshydratation (16) recevant ledit digestat liquide concentré (17) mélangé audit digestat humide concentré broyé et lysé (37,37A,37B) et produisant d'une part lesdites matières sèches combustibles (14), ledit dispositif de déshydratation (16) rejetant d'autre part par au-moins un conduit (15A) ladite eau de déshydratation (15) directement dans au-moins un fermenteur anaérobie (2 ;10), ledit dispositif de déshydratation (16) étant directement relié par au-moins un conduit unique d'évacuation (3B,3E) à au moins une sortie dudit premier fermenteur anaérobie (2) dans le cas d'un dispositif comprenant un seul fermenteur anaérobie (2) et étant directement relié par au-moins un conduit unique d'évacuation (3B,3E) à au moins une sortie dudit second fermenteur anaérobie (10) dans le cas d'un dispositif comprenant au moins deux fermenteurs anaérobie (2,10), ledit digestat liquide concentré (17) étant mélangé dans au-moins un fermenteur anaérobie (2,10) audit digestat humide concentré broyé et lysé (37, 37A, 37B) après réinjection en totalité dudit digestat humide concentré broyé et lysé (37, 37A, 37B) dans ledit au-moins un fermenteur anaérobie (2,10).

6. Dispositif selon la revendication 5 dans lequel au-moins un conduit (3a) permet audit digestat liquide concentré (17) de sortir du fond dudit au-moins un premier fermenteur anaérobie (2) et d'entrer directement dans ladite au-moins une pompe/broyeur (4).

7. Dispositif selon la revendication 5 dans lequel au-moins un séparateur de fibres et particules (5) reçoit un digestat liquide broyé (27) et rejette d'une part un digestat humide concentré broyé (25B) et d'autre part de l'eau clarifiée (24) mélangée à un reliquat d'un digestat liquide broyé (25A), ledit au-moins un séparateur de fibres et particules (5) étant relié directement à ladite au-moins une pompe/broyeur (4) par au moins un conduit (38) et étant relié directement audit au-moins un extracteur d'eau (6) par au moins un conduit (41).

8. Dispositif selon la revendication 5 dans le cas d'un dispositif comprenant deux fermenteurs anaérobie (2,10), où ledit au-moins un premier fermenteur anaérobie (2) produit une première partie du biogaz (13A) et où ledit au-moins un second fermenteur anaérobie (10) produit une seconde partie du biogaz (13B), ledit second fermenteur anaérobie (10) étant relié audit dispositif de lyse (18A, 18B, 18C) par au moins un conduit (40A) et ledit premier fermenteur anaérobie (2) étant relié audit dispositif de lyse (18A, 18B, 18C) par au moins un conduit (40B).

9. Dispositif selon la revendication 5 dans lequel le dispositif de lyse (18C) est relié directement audit au-moins un séparateur de fibres et particules (5) par au moins un conduit (8), le dispositif de lyse (18A) est relié directement audit au-moins un extracteur d'eau (6) par au moins un conduit (39) et le dispositif de lyse (18B) est relié directement aux dispositifs de lyse (18A,18C) par un conduit (37).

10. Dispositif selon la revendication 5 dans le cas d'un dispositif comprenant au-moins deux fermenteurs anaérobie (2,10) où le fond dudit premier fermenteur anaérobie (2) est relié directement audit second fermenteur anaérobie (10) par au moins un conduit (3c) conduisant ledit digestat liquide concentré (17) vers ledit second fermenteur anaérobie (10).

11. Dispositif selon la revendication 7 dans lequel ledit au-moins un séparateur de fibres et particules (5) produit
- d'une part ladite fraction d'eau clarifiée (24) mélangée audit reliquat d'un digestat liquide broyé (25A) sortant dudit au-moins un séparateur de fibres et particules (5) par au moins un conduit (41) et,
- d'autre part ledit digestat humide concentré broyé (25B) sortant dudit au-moins un séparateur de fibres et particules (5) par au moins un conduit (8) et, ledit digestat humide concentré broyé (25B) étant
- soit injecté par le conduit (11) dans ladite au-moins une pompe/broyeur (4) lorsque au-moins un moyen de dérivation (23) renvoie le digestat humide concentré broyé (25B) vers ladite au-moins une pompe/broyeur (4) au moyen du conduit (11), ou
- soit injecté par le conduit (8) à l'intérieur dudit au moins un dispositif de lyse (18C) lorsque ledit au-moins un moyen de dérivation (23) renvoie le digestat humide concentré broyé (25B) vers ledit au moins un dispositif de lyse (18C),
- soit injecté simultanément dans ladite au-moins une pompe/broyeur (4) et dans ledit dispositif de lyse (18C), lorsque ledit au-moins un moyen de dérivation (23) renvoie le digestat humide concentré broyé (25B) vers ladite pompe/broyeur (4) et vers ledit un dispositif de lyse (18C).

12. Dispositif selon la revendication 5 comprenant au-moins une pompe/broyeur (4) immergée à l'intérieur dudit au-moins un premier fermenteur anaérobie (2).

13. Dispositif selon la revendication 5 comprenant au moins un dispositif de déshydratation (16) relié par un conduit (15A) audit premier fermenteur anaérobie (2) dans le cas d'un dispositif comprenant un seul fermenteur anaérobie (2) et au moins un dispositif de déshydratation (16) relié par un conduit (15A) audit second fermenteur anaérobie (10) dans le cas d'un dispositif comprenant au moins deux fermenteurs anaérobie (2,10).

14. Dispositif selon la revendication 5 dans lequel une eau de déshydratation (15) issue dudit au moins un dispositif de déshydratation (16) est recyclée vers ledit au moins un fermenteur anaérobie (2,10) par au moins un conduit (15A).

## Patentansprüche

1. Verfahren zur Behandlung einer mit Wasser gemischten Biomasse (1) zur entkoppelten Erzeugung von trockenem Brennmaterial (14), Trinkwasser (12) und Biogas (13A, 13B),
wobei das Trinkwasser (12) keine suspendierten Stoffe enthält und einen Trockensubstanzgehalt aufweist, der 1 % jedenfalls unterschreitet,
wobei das Verfahren die nachfolgenden aufeinander folgenden Schritte umfasst:
(a) anaerobes Gären der mit Wasser gemischten Biomasse (1) in mindestens einem ersten anaeroben Fermenter (2), der mindestens zwei Auslassleitungen (3a, 3b) umfasst, die unmittelbar mit dem ersten anaeroben Fermenter (2) verbunden sind, was einen konzentrierten flüssigen Gärrest (17) und Biogas (13A) ergibt, und
(b) Pumpen und Zerkleinern des konzentrierten flüssigen Gärrests (17) mithilfe mindestens einer Mahlpumpe (4), was einen zerkleinerten konzentrierten flüssigen Gärrest (27) ergibt, und
(c) Trennen (5) der Fasern und Partikel des konzentrierten flüssigen Gärrests (27) zur Erzeugung von geklärtem Wasser (24), das mit einem Restbestand an einem zerkleinerten flüssigen Gärrest (25A) gemischt ist, und von einem konzentrierten feuchten zerkleinerten Gärrest (25B), der mindestens eine Lysevorrichtung (18C, 18B) durchlaufen wird,
(d) Leiten des mit einem Restbestand an einem zerkleinerten flüssigen Gärrest (25A) gemischten, geklärten Wassers (24) durch mindestens einen Wasserextraktor (6), um Trinkwasser (12) und den Restbestand an zerkleinertem flüssigem Gärrest (25A) zu erzeugen, welcher mindestens eine Lysevorrichtung (18A, 18B) durchlaufen wird, und anschließend :
(e) Erhalten eines zerkleinerten, lysierten, konzentrierten feuchten Gärrests (37) aus dem lysierten Gemisch des Restbestands an zerkleinertem flüssigem Gärrest (25A) mit dem konzentrierten, zerkleinerten feuchten Gärrest (25B),
(f) Zurückleiten dieses Gärrests (37, 37A, 37B) ohne Verluste
- zum ersten anaeroben Fermenter (2) im Falle eines Verfahrens, das einen einzigen anaeroben Fermenter (2) umfasst, um trockenes Brennmaterial (14) und Biogas (13A) zu erzeugen,
- und zu mindestens einem zweiten anaeroben Fermenter (10), umfassend mindestens zwei unmittelbar mit dem zweiten anaeroben Fermenter (10) verbundene Auslassleitungen (3E, 3F), im Falle eines Verfahrens, das mindestens zwei anaerobe Fermenter (2, 10) umfasst, um trockenes Brennmaterial (14) und eine erste Fraktion (13A) Biogas und eine zweite Fraktion (13B) Biogas zu erzeugen,
(g) Dehydrieren zur Erzeugen des trockenen Brennmaterials (14) mithilfe einer Entwässerungsvorrichtung (16), die den mit dem feuchten konzentrierten, zerkleinerten und lysierten Gärrest (37, 37A, 37B) gemischten konzentrierten flüssigen Gärrest (17) aufnimmt und ein Dehydratationswasser (15) über mindestens eine Leitung (15A) unmittelbar in mindestens einem anaeroben Fermenter (2, 10) verwirft, wobei die Entwässerungsvorrichtung (16) im Falle einer Vorrichtung, die einen einzigen anaeroben Fermenter (2) umfasst, über mindestens eine Ablaufleitung (3B, 3E) mit mindestens einem Auslass des ersten anaeroben Fermenters (2) verbunden ist, und im Falle einer Vorrichtung, die mindestens zwei anaerobe Fermenter (2, 10) umfasst, unmittelbar über mindestens eine Ablaufleitung (3B, 3E) mit mindestens einem Auslass des zweiten anaeroben Fermenters (10) verbunden ist, wobei der konzentrierte flüssige Gärrest (17) in mindestens einem anaeroben Fermenter (2, 10) mit dem zerkleinerten, lysierten, konzentrierten feuchten Gärrest (37, 37A, 37B) gemischt wird, nachdem der Gärrest (37, 37A, 37B) in den mindestens einen anaeroben Fermenter (2, 10) wieder injiziert wird.

2. Verfahren nach Anspruch 1, wobei:
im Schritt a) der konzentrierte flüssige Gärrest (17) am Boden des mindestens einen ersten anaeroben Fermenters (2) liegt, und
im Schritt b) der konzentrierte flüssige Gärrest (17) vom Boden des mindestens einen ersten anaeroben Fermenters (2) aus gepumpt wird, um der mindesten einen Mahlpumpe (4) zugeführt zu werden.

3. Verfahren nach Anspruch 3, umfassend mindestens einen zusätzlichen Schritt, der in der mit dem mindestens einen Wasserextraktor (6) verbundenen Leitung (42) erfolgt, bei dem es sich um einen Schritt der Qualitätskontrolle des extrahierten Wasser hinsichtlich Trübheit und Leitfähigkeit handelt.

4. Verfahren nach Anspruch 1, umfassend mindestens einen zusätzlichen Schritt, der in der mit dem mindestens einen ersten anaeroben Fermenter (2) verbundenen Leitung (3a) erfolgt, bei dem es sich um einen Schritt der Qualitätskontrolle der Biomasse hinsichtlich Viskosität und einer schnellen Bestimmung der biologischen Abbaubarkeit handelt.

5. Vorrichtung zur Behandlung einer mit Wasser gemischten Biomasse (1) zur entkoppelten Erzeugung von trockenem Brennmaterial (14), Trinkwasser (12) und Biogas (13A, 13B), umfassend
(i) mindestens einen ersten anaeroben Fermenter (2), der mindestens zwei Auslassleitungen (3a, 3b) umfasst, die unmittelbar mit dem ersten anaeroben Fermenter (2) verbunden sind, der die mit Wasser gemischte Biomasse (1) aufnimmt und durch Gären eines flüssigen konzentrierten Gärrests (17) Biogas (13A) erzeugt,
(ii) mindestens eine Mahlpumpe (4) zum Pumpen und Zerkleinern des konzentrierten flüssigen Gärrests (17), was einen zerkleinerten flüssigen Gärrest (27) ergibt, wobei die Mahlpumpe (4) unmittelbar mit dem ersten anaeroben Fermenter (2) über die Auslassleitung (3a) verbunden ist,
(iii) mindestens einen Faser- und Partikelabscheider (5), um ein mit einem Restbestand an einem zerkleinerten flüssigen Gärrest (25A) gemischtes geklärtes Wasser (24) und einen zerkleinerten konzentrierten feuchten Gärrest (25B), der mindestens eine Lysevorrichtung (18C, 18B) durchlaufen wird, zu trennen, wobei der Abscheider (5) unmittelbar mit der Mahlpumpe (4) verbunden ist,
(iv) mindestens einen Wasserextraktor (6), in den das mit dem Restbestand an zerkleinertem flüssigem Gärrest (25A) gemischte geklärte Wasser (24) hineinfließt, und der Trinkwasser (12) und den Restbestand an zerkleinertem flüssigem Gärrest (25A) extrahiert, wobei der Wasserextraktor (6) unmittelbar mit dem Abscheider (5) verbunden ist,
(v) die mindestens eine Lysevorrichtung (18A, 18B, 18C), die geeignet ist, den Restbestand an einem flüssigen zerkleinerten Gärrest (25A), den zerkleinerten konzentrierten feuchten Gärrest (25B) und einen aus der Mischung des Restbestands an zerkleinertem flüssigem Gärrest (25A) mit dem zerkleinerten konzentrierten feuchten Gärrest (25B) resultierenden zerkleinerten, lysierten, konzentrierten feuchten Gärrest (37) zu lysieren, wobei die Lysevorrichtung (18A, 18B) unmittelbar mit dem Wasserextraktor (6) verbunden ist, und wobei die Lysevorrichtung (18C) unmittelbar mit dem Abscheider (5) verbunden ist,
(vi) mindestens eine Leitung (40A, 40B), die einen zerkleinerten, lysierten, konzentrierten feuchten Gärrest (37, 37A, 37B) von der Lysevorrichtung (18B) abfließen lässt verlustfrei zurückfließen lässt
- in den ersten anaeroben Fermenter (2) im Falle einer Vorrichtung, die einen einzigen anaeroben Fermenter (2) umfasst, um das Biogas (13A) und das trockene Brennmaterial (14) zu erzeugen,
- und im Falle einer Vorrichtung, die mindestens zwei anaerobe Fermenter (2, 10) umfasst, in den mindestens einen zweiten anaeroben Fermenter (10), der mindestens zwei Auslassleitungen (3E, 3F), die unmittelbar mit dem zweiten anaeroben Fermenter (10) verbunden sind, umfasst, und der den konzentrierten flüssigen Gärrest (17) über eine unmittelbar mit dem ersten anaeroben Fermenter (2) verbundene Leitung (3c) erhält und andererseits den zerkleinerten, lysierten, konzentrierten feuchten Gärrest (37, 37A, 37B) sowie ein Dehydratationswasser (15) erhält, um eine erste (13A) und zweite Fraktion (13B) Biogas zu erzeugen,
(vii) mindestens eine Entwässerungsvorrichtung (16), die den mit dem zerkleinerten, lysierten konzentrierten feuchten Gärrest (37, 37A, 37B) gemischten flüssigen konzentrierten Gärrest (17) erhält und einerseits das trockene Brennmaterial (14) erzeugt und andererseits über mindestens eine Leitung (15A) des Dehydratationswasser (15) unmittelbar in mindestens einen anaeroben Fermenter (2, 10) abfließen lässt, wobei die Entwässerungsvorrichtung (16) im Falle einer Vorrichtung, die einen einzigen anaeroben Fermenter (2) umfasst, über mindestens eine Ablaufleitung (3B, 3E) mit mindestens einem Auslass des ersten anaeroben Fermenters (2) verbunden ist, und im Falle einer Vorrichtung, die mindestens zwei anaerobe Fermenter (2, 10) umfasst, unmittelbar über mindestens eine Ablaufleitung (3B, 3E) mit mindestens einem Auslass des zweiten anaeroben Fermenters (10) verbunden ist, wobei der konzentrierte flüssige Gärrest (17) in mindestens einem anaeroben Fermenter (2, 10) mit dem zerkleinerten, lysierten, konzentrierten feuchten Gärrest (37, 37A, 37B) gemischt wird, nachdem der Gärrest (37, 37A, 37B) in den mindestens einen anaeroben Fermenter (2, 10) wieder injiziert wird.

6. Vorrichtung nach Anspruch 5, wobei mindestens eine Leitung (3a) den konzentrierten flüssigen Gärrest (17) vom Boden des mindestens einen ersten anaeroben Fermenters (2) abfließen und unmittelbar in die mindestens eine Mahlpumpe (4) hineinfließen lässt.

7. Vorrichtung nach Anspruch 5, wobei mindestens ein Faser- und Partikelabscheider (5) einen zerkleinerten flüssigen Gärrest (27) erhält und einerseits einen zerkleinerten konzentrierten feuchten Gärrest (25B) und andererseits mit einem Restbestand an zerkleinertem flüssigem Gärrest (25A) gemischtes geklärtes Wasser (24) verwirft, wobei der mindestens eine Faser- und Partikelabscheider (5) unmittelbar mit der mindestens einen Mahlpumpe (4) über mindestens eine Leitung (38) verbunden ist und unmittelbar mit dem mindestens einen Wasserextraktor (6) über mindestens eine Leitung (41) verbunden ist.

8. Vorrichtung nach Anspruch 5
wobei im Falle einer Vorrichtung, die zwei anaerobe Fermenter (2, 10) umfasst, der mindestens eine anaerobe Fermenter (2) einen ersten Anteil Biogas (13A) erzeugt, und wobei der mindestens eine zweite anaerobe Fermenter (10) einen zweiten Anteil Biogas (13B) erzeugt, wobei der zweite anaerobe Fermenter (10) mit der Lysevorrichtung (18A, 18B, 18C) über mindestens eine Leitung (40A) verbunden ist, und wobei der erste anaerobe Fermenter (2) über mindestens eine Leitung (40B) mit der Lysevorrichtung (18A, 18B, 18C) verbunden ist.

9. Vorrichtung nach Anspruch 5, wobei die Lysevorrichtung (18C) über mindestens eine Leitung (8) mit dem mindestens einen Faser- und Partikelabscheider (5) verbunden ist, wobei die Lysevorrichtung (18A) über mindestens eine Leitung (39) unmittelbar mit dem mindestens einen Wasserextraktor (6) verbunden ist, und wobei die Lysevorrichtung (18B) über eine Leitung (37) unmittelbar mit den Lysevorrichtungen (18A, 18C) verbunden ist.

10. Vorrichtung nach Anspruch 5
wobei im Falle einer Vorrichtung, die mindestens zwei anaerobe Fermenter (2, 10) umfasst, der Boden des ersten anaeroben Fermenters (2) über mindestens eine Leitung (3c), die den konzentrierten flüssigen Gärrest (17) dem zweiten anaeroben Fermenter (10) zuführt, unmittelbar mit dem zweiten anaeroben Fermenter (10) verbunden ist.

11. Vorrichtung nach Anspruch 7
wobei der mindestens eine Faser- und Partikelabscheider (5) einerseits die mit dem Restbestand an zerkleinertem flüssigem Gärrest (25A) gemischte Fraktion von geklärtem Wasser (24) erzeugt, die vom mindestens einen Faser- und Partikelabscheider (5) über mindestens eine Leitung (41) abfließt, und
andererseits der zerkleinerte konzentrierte feuchte Gärrest (25B) vom mindestens einen Faser- und Partikelabscheider (5) über mindestens eine Leitung (8) abfließt, und wobei der Gärrest (25B) entweder
über die Leitung (11) in die mindestens eine Mahlpumpe (4) injiziert wird, wenn mindestens ein Ableitungsmittel (23) den Gärrest (25B) über die Leitung (11) der mindestens einen Mahlpumpe (4) zuführt, oder
über die Leitung (8) in die mindestens eine Lysevorrichtung (18C) injiziert wird, wenn das mindestens eine Ableitungsmittel (23) den Gärrest (25B) der mindestens einen Lysevorrichtung (18C) zuführt,
oder in die mindestens eine Mahlpumpe (4) und die Lysevorrichtung (18C) gleichzeitig injiziert wird, wenn das mindestens eine Ableitungsmittel (23) den Gärrest (25B) der Mahlpumpe (4) und der Lysevorrichtung (18C) zuführt.

12. Vorrichtung nach Anspruch 5
umfassend mindestens eine Mahlpumpe (4), die im Inneren des mindestens einen ersten anaeroben Fermenters (2) eingetaucht ist.

13. Vorrichtung nach Anspruch 5
umfassend mindestens eine Entwässerungsvorrichtung (16), die über eine Leitung (15A) mit dem mindestens einen anaeroben Fermenter (2) verbunden ist, wenn es sich um eine Vorrichtung handelt, die nur einen anaeroben Fermenter (2) umfasst, und
umfassend mindestens eine Entwässerungsvorrichtung (16), die über eine Leitung (15A) mit dem zweiten anaeroben Fermenter (10) verbunden ist, wenn es sich um eine Vorrichtung handelt, die mindestens zwei anaerobe Fermenter (2, 10) umfasst.

14. Vorrichtung nach Anspruch 5
wobei ein von der mindestens einen Entwässerungsvorrichtung (16) ausgehendes Dehydratationswasser (15) dem mindestens einen anaeroben Fermenter (2, 10) über mindestens eine Leitung (15A) wieder zugeführt wird.

## Claims

1. A process to treat biomass (1) mixed with water for the decoupled production of dry fuel material (14), potable water (12) and biogas (13A,13B),
said potable water (12) not containing any matter in suspension and having a dry matter content strictly lower than 1 %,
said process successively comprising the following steps:
(a) subjecting said biomass (1) mixed with water to anaerobic fermentation in at least one first anaerobic fermenter (2) comprising at least two outlet conduits (3a;3b) directly connected to said first anaerobic fermenter (2), resulting in a concentrated liquid digestate (17) and a biogas (13A); and
(b) pumping and grinding said concentrated liquid digestate (17) by means of at least one pump/grinder (4), resulting in a milled, concentrated liquid digestate (27); and
(c) separating (5) the fibres and particles of said milled, concentrated liquid digestate (27) to obtain firstly clarified water (24) mixed with a residue of milled liquid digestate (25A), and secondly a milled, concentrated wet digestate (25B) that will be passed through at least one lysing device (18C,18B);
(d) passing said clarified water (24) mixed with a residue of milled, liquid digestate (25A) through at least one water extractor (6) to obtain firstly potable water (12) and secondly said residue of milled, liquid digestate (25A) that will be passed through at least one lysing device (18A,18B); then
(e) obtaining a milled and lysed, concentrated wet digestate (37) derived from the lysed mixture of the residue of milled liquid digestate (25A) and milled, concentrated wet digestate (25B),
(f) returning said milled and lysed, concentrated wet digestate (37,37A,37B) without any loss thereof:
- to the first anaerobic fermenter (2) in a process comprising a single anaerobic fermenter (2), to produce dry fuel material (14) and to produce said biogas (13A),
- and to at least one second anaerobic fermenter (10) comprising at least two outlet conduits (3E;3f) directly connected to second anaerobic fermenter (10), in a process comprising at least two anaerobic fermenters (2,10) to produce the dry fuel material (14) and to produce a first fraction (13A) of said biogas and a second fraction (13B) of said biogas;
(g) dehydrating to produce said dry fuel material (14) by means of a dehydrating device (16) that receives said concentrated liquid digestate (17) mixed with said milled and lysed, concentrated wet digestate (37, 37A,37B), and discharges a dehydration water (15) via at least one conduit (15A) directly into at least one anaerobic fermenter (2,10), said dehydrating device (16) being directly connected via at least one single evacuation line (3B,3E) to at least one outlet of said first anaerobic fermenter (2) if the device comprises a single anaerobic fermenter (2), and being directly connected via at least one single evacuation line (3B,3E) to at least one outlet of said anaerobic fermenter (10) if the device comprises at least two anaerobic fermenters (2,10), said concentrated liquid digestate (17) being mixed in said at least one anaerobic fermenter (2,10) with said milled and lysed, concentrated wet digestate (37,37A,37B) after reinjection of the entirety of said milled and lysed, concentrated wet digestate (37,37A,37B) into at least one anaerobic fermenter (2,10).

2. The process according to claim 1, wherein:
at step a) said concentrated liquid digestate (17) rests at the bottom of said at least one first anaerobic fermenter (2); and
at step b) the pumping of said concentrated liquid digestate (17) takes place from the bottom of said at least one first anaerobic fermenter (2), for conveying thereof towards said at least one pump/grinder (4).

3. The process according to claim 3, comprising at least one additional step implemented at conduit (42) connected to said at least one water extractor (6), said additional step being a step to control the quality of the extracted water by means of turbidity and conductivity.

4. The process according to claim 1, comprising at least one additional step implemented at conduit (3a) connected to said at least one first anaerobic fermenter (2), said additional step being a step to control the quality of the biomass by means of viscosity and rapid measurement of biodegradability.

5. A **device** to treat biomass (1) mixed with water for the decoupled production of dry fuel material (14), potable water (12) and biogas (13A,13B) said device comprising:
(i) at least one first anaerobic fermenter (2) comprising at least two outlet conduits (3a;3b) directly connected to said first anaerobic fermenter (2) which receives biomass (1) mixed with water and produces biogas (13A) via fermentation of a concentrated liquid digestate (17);
(ii) at least one pump/grinder (4) to pump and grind said concentrated liquid digestate (17), resulting in a milled liquid digestate (27), said pump/grinder (4) being directly connected to said first anaerobic fermenter (2) via the outlet conduit (3a),
(iii) at least one fibre and particle separator (5) to separate clarified water (24) mixed with a residue of milled liquid digestate (25A) from a milled, concentrated wet digestate (25B) that is to be passed through at least one lysing device (18C,18B), said fibre and particle separator (5) being directly connected to said pump/grinder (4);
(iv) at least one water extractor (6) receiving said clarified water (24) mixed with said residue of milled liquid digestate (25A) and which extracts potable water (12) and said residue of milled liquid digestate (25A), said water extractor (6) being directly connected to said fibre and particle separator (5);
(v) said at least one lysing device (18A,18B,18C) adapted to lyse said residue of milled liquid digestate (25A) and said milled concentrated wet digestate (25B); a milled and lysed, concentrated wet digestate (37) resulting from the lysed mixture of said residue of a milled liquid digestate (25A) and said milled concentrated wet digestate (25B), said lysing device (18A,18B) being directly connected to said water extractor (6) and said lysing device (18C) being directly connected to said fibre and particle separator (5);
(vi) at least one conduit (40,40B) allowing the milled and lysed, concentrated wet digestate (37, 37A, 37B) to leave said lysing device (18B) and to be returned without any loss thereof:
- to the first anaerobic fermenter (2) in a device comprising a single anaerobic fermenter (2) to produce said biogas (13A) and said dry fuel material (14);
- and to at least one second anaerobic fermenter (10) comprising at least two outlet conduits (3E;3f) directly connected to said second anaerobic fermenter (10) receiving said concentrated liquid digestate (17) via a conduit (3c) directly connected to the first anaerobic fermenter (2) and also receiving said milled and lysed, concentrated wet digestate (37,37A,37B) and dehydration water (15) in a device comprising at least two anaerobic fermenters (2,10) to produce a first (13A) and a second fraction (13B) of said biogas;
(vii) at least one dehydrating device (16) receiving said concentrated liquid digestate (17) mixed with said milled and lysed, concentrated wet digestate (37,37A,37B) and producing said dry fuel material (14), said dehydrating device (16) discharging via at least one conduit (15A) said dehydration water (15) directly into at least one anaerobic fermenter (2,10), said dehydrating device (16) being directly connected via at least one single evacuation line (3B,3E) to at least one outlet of said first anaerobic fermenter (2) in a device comprising a single anaerobic fermenter (2) and being directly connected via at least one single evacuation line (3B,3E) to at least one outset of said second anaerobic fermenter (10) in a device comprising at least two anaerobic fermenters (2,10), said concentrated liquid digestate (17) being mixed in at least one anaerobic fermenter (2,10) with said milled and lysed, concentrated wet digestate (37,37A,37B) after reinjection of the entirety of said milled and lysed, concentrated wet digestate (37,37A,37B) into said at least one anaerobic fermenter (2,10).

6. The device according to claim 5, wherein at least one conduit (3a) allows said concentrated liquid digestate (17) to leave the bottom of said at least one first anaerobic fermenter (2) and-to enter directly into said at least one pump/grinder (4).

7. The device according to claim 5, wherein at least one fibre and particle separator (5) receives a milled liquid digestate (27) and discharges firstly a milled concentrated wet digestate (25B) and secondly clarified water (24) mixed with a residue of milled liquid digestate (25A), said at least one fibre and particle separator (5) being connected directly to said at least one pump/grinder (4) via at least one conduit (38) and being directly connected to said at least one water extractor (6) via at least one conduit (41).

8. The device according to claim 5, in a device comprising two anaerobic fermenters (2,10), wherein said at least one first anaerobic fermenter (2) produces a first biogas portion (13A) and wherein said at least one second anaerobic fermenter (10) produces a second biogas portion (13B), said second anaerobic fermenter (10) being connected to said lysing device (18A,18B,18C) via at least one conduit (40A) and said first anaerobic fermenter (2) being connected to said lysing device (18A,18B,18C) via at least one conduit (40B).

9. The device according to claim 5, wherein the lysing device (18C) is directly connected to said at least one fibre and particle separator (5) via at least one conduit (8), the lysing device (18A) is directly connected to said at least one water extractor (6) via at least one conduit (39) and the lysing device (18B) is directly connected to the lysing devices (18A,18C) via a conduit (37).

10. The device according to claim 5, in a device comprising at least two anaerobic fermenters (2,10) wherein the bottom of said first anaerobic fermenter (2) is directly connected to said second anaerobic fermenter (10) via at least one conduit (3c) conveying said concentrated liquid digestate (17) into said second anaerobic fermenter (10).

11. The device according to claim 7, wherein said at least one fibre and particle separator (5) produces:
• first, said fraction of clarified water (24) mixed with said residue of milled liquid digestate (25A) leaving said at least one fibre and particle separator (5) via at least one conduit (41); and
• secondly, said milled concentrated wet digestate (25B) leaving said at least one fibre and particle separator (5) via at least one conduit (8), and said milled concentrated wet digestate (25B) being:
• either injected via conduit (11) into said at least one pump/grinder (4) when at least one branch means (23) returns the milled concentrated wet digestate (25B) to said at least one pump/grinder (4) by means of conduit (11), or
• or injected via conduit (8) into said at least one lysing device (18C) when said at least one branch means (23) returns the milled concentrated wet digestate (25B) to said at least one lysing device (18C),
• or simultaneously injected into said at least one pump/grinder (4) and into said lysing device (18C) when said at least one branch means (23) returns the milled concentrated wet digestate (25B) to said pump/grinder (4) and to said at least one lysing device (18C).

12. The device according to claim 5, comprising at least one pump/grinder (4) immersed inside said at least one first anaerobic fermenter (2).

13. The device according to claim 5, comprising at least one dehydrating device (16) connected via a conduit (15A) to said first anaerobic fermenter (2) if the device comprises a single anaerobic fermenter (2), and
at least one dehydrating device (16) connected via a conduit (15A) to said second anaerobic fermenter (10) if the device comprises at least two anaerobic fermenters (2,10).

14. The device according to claim 5, wherein dehydration water (15) derived from said at least one dehydrating device (16) is recycled back to said at least one anaerobic fermenter (2,10) via at least one conduit (15A).
